# FASCICULE DE BREVET EUROPEEN

(11) **EP 1 290 417 B1**
(45) Date de publication et mention de la délivrance du brevet: **04.03.2009**
(21) Numéro de dépôt: 01945381.0
(22) Date de dépôt: 08.06.2001
(51) Int. Cl.: G01J 4/00, G01N 21/21

(54) **ELLIPSOMETRE SPECTROSCOPIQUE A FAIBLE BRUIT**
RAUSCHARMES SPEKTROSKOPISCHES ELLIPSOMETER
LOW-NOISE SPECTROSCOPIC ELLIPSOMETER

(30) Priorité: 09.06.2000 FR 0007425
(43) Date de publication de la demande: 12.03.2003
(73) Titulaire: Fahrenheit Thermoscope LLC, Las Vegas, NV 89119 (US)
(72) Inventeur: FERRIEU, Frédéric, F-38700 Corenc (FR)
(74) Mandataire: Callon de Lamarck, Jean-Robert
(86) Numéro de dépôt international: PCT/FR2001/001781
(87) Numéro de publication internationale: WO 2001/094898

(56) Documents cités:
- DE-A- 19 721 045
- DE-U- 29 521 772
- US-A- 4 822 168
- US-A- 5 329 357
- US-A- 5 956 144
- PATENT ABSTRACTS OF JAPAN vol. 97, no. 07, 31 juillet 1997 (1997-07-31) & JP 09 079905 A (SHIMAZDU CORP.), 18 mars 1997 (1997-03-18)

## Description

La présente invention est relative à un ellipsomètre spectroscopique à faible bruit.

### DOMAINE GENERAL ET ETAT DE LA TECHNIQUE

### Généralités

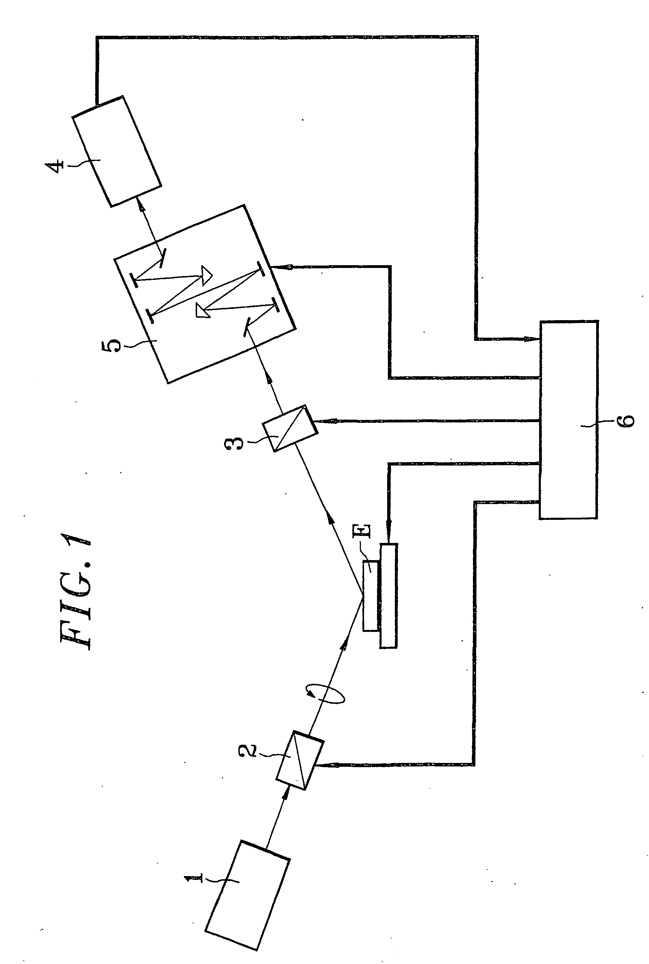

Le principe d'un ellipsomètre conforme à un état de la technique connu a été représenté sur la figure 1.

Un tel ellipsomètre comporte classiquement une source lumineuse 1, un polariseur 2, un analyseur 3 et un détecteur 4 associé à un monochromateur 5.

Ces différents éléments sont disposés de telles sorte que la lumière en sortie de la source 1 traverse le polariseur 2 avant d'atteindre un échantillon E à analyser, puis, après réflexion sur cet échantillon E, traverse l'analyseur 3 avant d'atteindre le détecteur 4 après être passé à travers le monochromateur 5, qui est généralement un photomultiplicateur.

L'un des deux éléments que constituent le polariseur 2 ou l'analyseur 3 est un élément tournant.

La sortie du détecteur 4 est reliée à des moyens de traitement 6 qui mettent en oeuvre une analyse de Fourier sur le signal modulé mesuré par le détecteur 4, afin de déterminer des informations relativement à l'état de surface de l'échantillon E.

On rappelle en effet que lors de sa réflexion sur l'échantillon E, la polarisation de la lumière est modifiée et qu'un montage ellipsomètrique permet de mesurer d'une part la différence de phase Δ et d'autre part le rapport tan(ψ) entre les composantes de polarisations parallèles et perpendiculaires du faisceau réfléchi sur l'échantillon.

Grâce au monochromateur 5, il est possible de réaliser des mesures à plusieurs longueurs d'onde et ainsi de caractériser les propriétés optiques du matériau.

Pour une présentation générale de techniques d'ellipsomètrie spectroscopique, on pourra avantageusement se référer au brevet US 5.329.357 (Bernoux et al.) qui décrit uniquement l'intérêt d'adjonction de fibres optiques sur ce montage.

Les ellipsomètres visibles spectroscopiques disponibles sur le marché travaillent généralement dans une gamme spectrale entre 1 µm et 230 nm et utilisent une source à arc Xénon (sélectionnées pour leur haute irradiance).

Il a toutefois déjà été proposé des éllipsomètres susceptibles de travailler dans une gamme spectrale plus large que celle des éllipsomètres précités et qui comportent une source additionnelle, telle qu'une source au Deutérium (D2) moins ponctuelle émettant entre 130 et 700 nm avec une puissance de 30 à quelques centaines de Watts ou supérieure.

Les détecteurs utilisés sont quant à eux généralement des détecteurs de type photodiode Si, Ge ou des photomultiplicateurs (généralement des photomultiplicateurs multi-alcalins), fonctionnant à la température ambiante.

Ils utilisent des optiques de très haute qualité, qui possèdent des coefficients d'extinctions de polarisation de l'ordre de 10⁻⁵, ainsi qu'une très haute transparence même dans l'ultraviolet.

Ceci permet, dans la gamme spectrale précitée, des déterminations des coefficients ψ et Δ avec une précision égale ou inférieure au 1/1000^{ème} de degré.

Par ailleurs, les moyens de traitement de la plupart des ellipsomètres mettent en oeuvre une méthode de comptage de photon simplifiée, cette méthode étant connue sous le nom de méthode d'Hadamart. Cette méthode consiste à compter des photons avec un signal échantillonné en amplitude sur un nombre très limité de canaux : huit compteurs ou canaux, à chaque période de rotation de l'élément tournant de l'ellipsomètre (configuration polariseur ou analyseur tournant (polarisation modulée) et/ou lame tournante (modulation de phase).

### Inconvénients des éllpsomètres de l'état de la technique

Les éllipsomètres du type de ceux qui viennent d'être décrits présentent plusieurs limitations.

Une première limitation est liée directement aux fluctuations de la source, c'est à dire à son instabilité (bruit appelé SNL ou « shot noise limited », selon la terminologie anglo-saxonne).

Une autre limitation est liée au bruit provenant de la lumière environnante dit également de « bruit de fuite », qui s'élimine théoriquement par une parfaite isolation de l'ensemble de l'éllipsomètre (et non uniquement du photomultiplicateur) vis à vis de la lumière ambiante, mais qui reste encore une difficulté à laquelle beaucoup de fabricants d'éllipsomètres se heurtent.

Une autre limitation encore tient au courant d'obscurité ou bruit intrinsèque lié au photomultiplicateur et à sa chaîne interne d'amplification. Ce bruit est communément appelé le DNL, c'est à dire « detector noise limited », selon la terminologie anglo-saxonne. On notera que toutes les fréquences correspondant à la largeur de bande du photomultiplicateur y sont généralement présentes.

Ainsi, les sommes d'Hadamart (déterminées sur des quarts de périodes du signal modulé) sont calculées en tenant compte d'un décalage ou "offset" mesuré auparavant qui correspond au bruit de fuite et au DNL.

Toutefois, bien que les éllipsomètres classiques correspondent pratiquement à une détection synchrone (filtrage fréquentiel en phase de la modulation du signal), la méthode d'Hadamart devient délicate lorsque l'amplitude de modulation est faible.

Pour un signal modulé à ω, l'amplitude de la composante spectrale à 2ω du signal est du même ordre de grandeur que celle du bruit (et notamment plus particulièrement dans l'ultraviolet, où des comptages de seulement 100 à 1000 coups par seconde (cps) sont mesurés).

Les composantes du signal sont ainsi « noyées » dans le niveau du bruit qui correspond lui-même à une superposition de densité spectrale du bruit de la source, un bruit de grenaille dans le cas d'un arc xénon, de la lumière ambiante et du détecteur et de son électronique associée.

En outre, avec des éllipsomètres classiques, lorsque l'on cherche à travailler à des longueurs en dessous de 200 nm, le rapport signal/bruit observé est peu favorable.

La seule façon connue pour éliminer les effets des différentes sources de bruit est alors d'augmenter les temps d'acquisition.

Mais la mesure est alors entachée d'erreurs systématiques, notamment pour les longueurs d'ondes en dessous de 200 nm. Aussi les appareils doivent-ils utiliser des pré-calibrations.

Par ailleurs, on notera également qu'un problème rencontré avec les éllipsomètres utilisant des sources additionnelles pour élargir leur gamme de fonctionnement est celui de leur coût et de la puissance d'alimentation qu'ils nécessitent.

Dans ces conditions, il est pratiquement impossible d'envisager dans le cas d'une mesure in situ (métrologie intégrée), un système suffisamment compact même dans un système de comptage de photons tel qu'il est décrit ci-dessus. L'impossibilité d'une tête de mesure interne au bâti aboutit à une limitation due au fenêtres du bâti de métrologie qui introduisent des effets de biréfringence qui doivent être corrigés.

### PRESENTATION DE L'INVENTION

Un but de l'invention est de pallier ces inconvénients.

Elle propose notamment une structure d'ellipsomètre dans laquelle le bruit est minimisé.

On connaît, notamment par l'abrégé de la demande de brevet japonais 09079905 des techniques consistant à refroidir des photomultiplicateurs dans des applications très différentes de celles des ellipsomètres.

Ces techniques de refroidissement ne sont aucunement destinées à permettre des réductions de bruit. Elle servent à abaisser autant que possible les limites de détection.

L'invention propose quant à elle un ellipsomètre spectroscopique comportant une source lumineuse émettant un faisceau optique, un polariseur disposé sur le trajet du faisceau optique émis par la source lumineuse, un support d'échantillon recevant le faisceau lumineux en sortie du polariseur, un analyseur de polarisation destiné à être traversé par le faisceau réfléchi par l'échantillon à analyser, un ensemble de détection qui reçoit le faisceau en sortie de l'analyseur et qui comporte un monochromateur et un photodétecteur, des moyens pour le traitement du signal en sortie de cet ensemble de détection, qui comportent une électronique de comptage.

Cet ellipsomètre présente la caractéristique de comporter des moyens de refroidissement pour maintenir l'ensemble de détection à basse température, c'est-à-dire à une température de l'ordre de -15°C ou inférieure.

Avantageusement également, sa source est une lampe Deutérium, qui est de préférence d'une puissance de l'ordre de 30 watts.

D'autres sources à faible bruit sont envisageables et notamment des sources à lampe à plasma ou à lampe halogène.

De façon avantageuse également, l'électronique de comptage est apte à mettre en oeuvre un échantillonnage en amplitude sur un nombre de canaux entre 8 (équivalent Hadamart) jusqu'à 1024 (Fourier filtré), notamment préférentiellement de l'ordre de 1000 ou supérieur, notamment sur un nombre de canaux compris entre 1024 et 8192 (suivant le type de codeur).

Les moyens de traitement mettent en oeuvre une analyse de Fourier sur les signaux ainsi échantillonnés.

Ainsi, l'ellipsomètre proposé permet une minimosation du bruit (pour optimiser sa précision), i) avec une protection totale de la lumière ambiante, ii) pas d'environnement polluant (vibrations mécaniques et/ou sources de bruit électromagnétique) et iii) un détecteur travaillant en comptage de photons dans un niveau de bruit intrinsèque minimum obtenu ici par refroidissement (12) qui maintient l'ensemble de détection à une température inférieure à la température ambiante. Plus performant en terme de détection du signal, il maintient la possibilité d'utiliser des fibres optiques jusqu'à 160 nm. Ceci permet de l'utiliser donc de façon compacte dans une métrologie intégrée associée au développement actuel des outils regroupés (« cluster tools ») dans le domaine de la technologie des couches minces. Le système devient en effet entièrement intégré dans le bâti in situ puisqu'il permet l'utilisation de films.

### PRESENTATION DES FIGURES

D'autres caractéristiques et avantages de l'invention ressortiront encore de la description qui suit, laquelle est purement illustrative et non limitative et doit être lue en regard des dessins annexés sur lesquels :
- la figure 1, déjà discutée, est une représentation schématique illustrant le principe d'un ellipsomètre spectroscopique connu dans l'état de la technique;
- la figure 2 est une représentation schématique d'un ellipsomètre conforme à un mode de réalisation de l'invention;
- les figures 3a et 3b sont des graphes sur lesquels on a porté-en fonction de la longueur d'onde des mesures de paramètres ψ et Δ pour un ellipsomètre conforme à celui de la figure 2 et un ellipsomètre standard;
- la figure 4 est un graphe sur lequel on a porté en fonction de la longueur d'onde des mesures de traces directes obtenues pour un ellipsomètre conforme à celui de la figure 2 et un ellipsomètre standard.

### DESCRIPTION DE MODES DE REALISATION POSSIBLES POUR L'INVENTION

### Principes

Un ellipsomètre spectroscopique conforme à un mode de réalisation possible de l'invention présente les différentes caractéristiques suivantes.
1) Sa source 1 est une source unique à faible bruit, c'est à dire une source présentant une dispersion en fréquence très inférieure à celle de lampe à arc Xénon.
   Une telle source est avantageusement une lampe Deutérium D2.
   Les lampes Deutérium D2 sont des lampes d'un bruit particulièrement faible. Elles présentent une bien plus grande stabilité que les lampes à arc Xénon (stabilité dans un rapport 20), ainsi qu'une bien meilleure stabilité que d'autres types de lampes dans le domaine ultraviolet et une partie du visible.
   D'autres types de lampes peuvent être envisagées. Notamment, des lampes halogène (vers l'infrarouge) ou lampes à décharge plasma (visible et UV) ou source plasma sont particulièrement appropriées, même avec un spectre de raies d'émission (non continu).
2) Son photomultiplicateur 5 est placé, avec sa protection magnétique, dans un environnement à basse température, ce qui diminue et stabilise son courant d'obscurité.
   On utilise par exemple à cet effet un système de refroidissement par effet Peltier (-15°C).
   En diminuant le courant d'obscurité du photomultiplicateur, on diminue le bruit par au moins une décade (de 200 cps à 10 cps, par exemple).
   Ainsi les effets d'instabilité de l'offset décrit plus haut sont éliminés.
   Des températures plus basses améliorent encore les performances du photomultiplicateur à quelques coups par secondes.
   Dans une gamme spectrale telle que l'ultraviolet, avec une lampe D₂ le bruit d'émission de la source est faible. Le DNL est alors du même ordre de grandeur que la limite SNL. Cela revient à dire que le nombre de coups du comptage du courant d'obscurité N_{d} demeure toujours négligeable, seul un faible bruit résiduel de la source Nₚₕ (nombre de photons dus à l'émission de la source) dégrade le signal. Grâce à la diminution du courant d'obscurité intrinsèque du photomultiplicateur, on obtient donc une mesure d'ellipsométrie précise, qui est impossible à obtenir si Nₚₕ ≤ N_{d}.
   Notamment, cette diminution de courant permet des mesures à 187 nm, en utilisant une lampe de faible puissance et dans un environnement non restreint (absence de vide ou de purge avec un gaz neutre ou d'atmosphère sec). Le photomultiplicateur travaille dans un mode de comptage de photons et est idéalement linéaire (pas de non linéarité liée aux effets de recouvrements d'avalanches (saturation en mode analogique)).
   Cette limite de 160 nm peut alors être franchie également en se plaçant dans des conditions d'atmosphère inerte (azote) et avec un PMT (R7639 de Hamamatsu) et un monochromateur correspondant. Dans l'extrême UV (120-160nm), il est judicieux d'utiliser un refroidissement de l'embase du photomultiplicateur 5, ou un balayage de N2 dans l'enceinte du photomultiplicateur refroidit grâce à un élément frigorifique de type échangeur Peltier, évitant ainsi l'introduction de fenêtre en MgF2.
3) Par ailleurs, l'ellipsomètre spectroscopique proposé met en oeuvre un comptage sur un nombre de canaux importants : jusqu'à plus de 1024 canaux, ce qui, combiné avec l'analyse de Fourier, suréchantillonne le signal et constitue un filtre efficace des composantes de bruit aux hautes fréquences, c'est à dire des bruits intrinsèques des sources et détecteur et de l'électronique.
   Le temps d'accumulation est réduit.
   Cette technique de comptage s'avère bien supérieure à ce que permet la méthode d'Hadamart. Elle peut être réalisée de façon simple avec des électroniques du commerce. Le suréchantillonnage qu'elle réalise contribue à atténuer le bruit à toutes les hautes fréquences associées au bruit de la lampe.

### Exemple détaillé d'un mode de réalisation possible

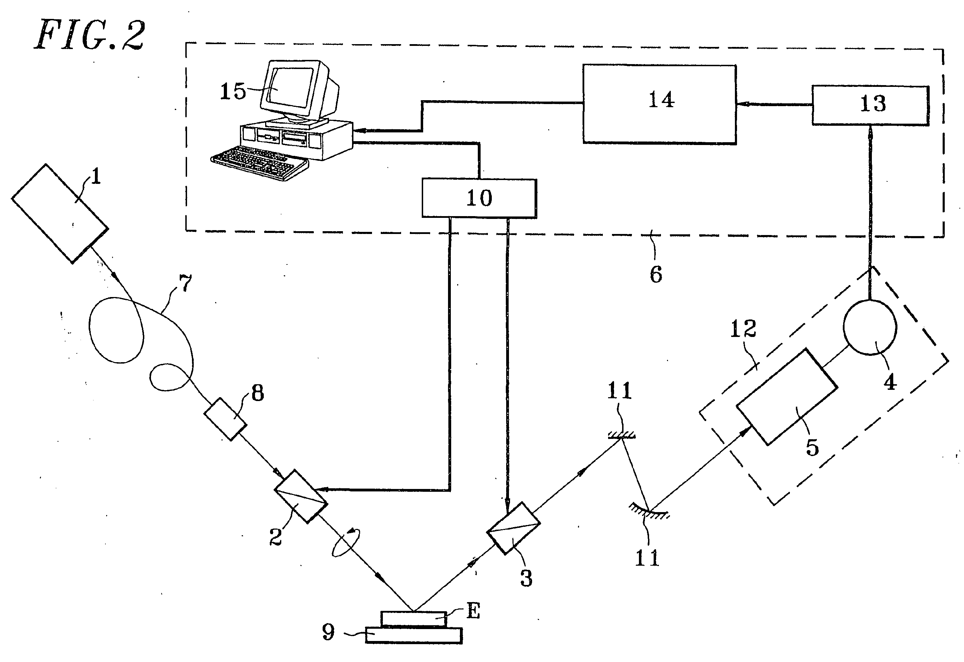

Un exemple d'éllipsomètre conforme à un mode de réalisation possible va maintenant être décrit de façon détaillée en référence à la figure 2.

Cet ellipsomètre est du type à polariseur tournant.

Il fonctionne entre 180nm et 750nm. Il peut être envisagé de l'utiliser sous vide et atmosphère contrôlé de façon à étendre sa gamme de fonctionnement vers la gamme de 130 à 720 nm.

La source 1 est une lampe deutérium (D₂) de 30 watts de puissance et de diamètre de point source de 0.5mm (lampe Oriel 63163 ou Hamamatsu L7295 ou L7296).

Le faisceau lumineux est transféré depuis la source 1 par le biais d'une fibre en silice fondue mono-brin 7 de 600 micromètres jusqu'au polariseur tournant 2. Une fonction de cette fibre est notamment d'éliminer la biréfringence résiduelle de la source 1.

Le couplage avec le polariseur tournant 2 est réalisé par le biais d'un élément convergent 8 en silice fondue, sélectionné pour sa faible biréfringence résiduelle et sa transparence dans l'ultraviolet.

Il peut également être réalisé à l'aide d'un ensemble miroir concave et miroir plan traités en surface MgF2.

L'échantillon E à analyser est disposé en sortie du polariseur 2, sur un support 9 d'orientation réglable.

Le faisceau réfléchi par l'échantillon est envoyé sur l'analyseur 3.

Le polariseur 2 et l'analyseur 3 sont en MgF2 (par exemple, ils sont constitués par des analyseurs et polariseurs de la société Fichou/Optique, qui certifie 2.5 degré de déviation à 250nm et une bande passante jusqu'à 10 eV). Ce choix de matériau permet d'obtenir la plus grande transparence dans l'ultraviolet.

La rotation du polariseur 2 s'effectue à une fréquence de la dizaine de hertz (critère de choix lié à l'environnement) (fréquence du secteur ou des vibrations)) et est commandée par un ensemble mécanique de type pas à pas (micro pas).

Après réflexion sur l'échantillon et passage à travers l'analyseur 3, le faisceau est refocalisé par un jeu de miroirs 11 et envoyé en entrée du monochromateur 5, qui est un double monochromateur à réseau 1/8 M type 77250 Oriel blasé à 250nm à 1200 traits (180nm à 500nm au premier ordre et une fente intermédiaire 0.6mm ; sa résolution à 500nm est de 4nm). Des réseaux blasés à 200nm mais avec 600 traits/mm peuvent être utilisés.

Le système incorpore automatiquement successivement deux filtres durant la mesure de façon à éliminer les ordres supérieurs de diffraction des réseaux du monochromateur. La commande s'effectue par l'intermédiaire d'un passeur de filtre de ORIEL et un interface Ni DAQ (TTL) de National Instrument.

La sortie du monochromateur 5 est envoyée sur le détecteur 4 qui permet le comptage de photons. Ce détecteur 4 est du type à tube et est commercialisé sous la référence R2949 ou R7639 par Hamatsu.

Le détecteur 4 est disposé dans un refroidisseur 12 qui est de type C- 659S et qui le maintient à une température de -15°.

L'électronique de comptage comporte un discriminateur 13 relié au détecteur 4. Ce discriminateur est du type commercialisé par Hamatsu sous la référence C 3866 qui a une dynamique linéarité de 10⁷.

Le détecteur 4 et le discrimateur 13 sont choisis pour leurs caractéristiques de faible courant d'obscurité (159 cps (cycles par seconde) à 25°C et descend à moins de 10 cps refroidit pour le R2949 et à moins d'un cps pour le R7639 (qui a un rendement quantique de 44% à 160 nm). Ceci peut être mis en oeuvre en utilisant un refroidissement eau ou encore par le biais d'une circulation d'azote « cryogénique » refroidie externe grâce à des éléments Peltier réfrigérants et un échangeur thermique externe). Le détecteur et le discriminateur sont également choisis pour leur sensibilité au bleu de 8.3µA/lm avec un gain de 10⁷. L'électronique de comptage de photons à une linéarité de 10⁷ photons.

La sortie TTL du discriminateur 13 est analysée au moyen d'une carte 14 de comptage multi-échelle (MCS II Nuclear Instrument ou FMS (carte CM 7882 Canberra Electronics) capable d'analyser 8192 canaux de comptage, deux entrées simultanées avec un temps d'échantillonnage de 2µs.

Cette carte 14 est gérée par un ordinateur 15 sous environnement Windows NT serveur avec une programmation objet C++ couplée aux composants active X commerciaux, ici les components works++ de National Instruments.

### Exemples de résultats

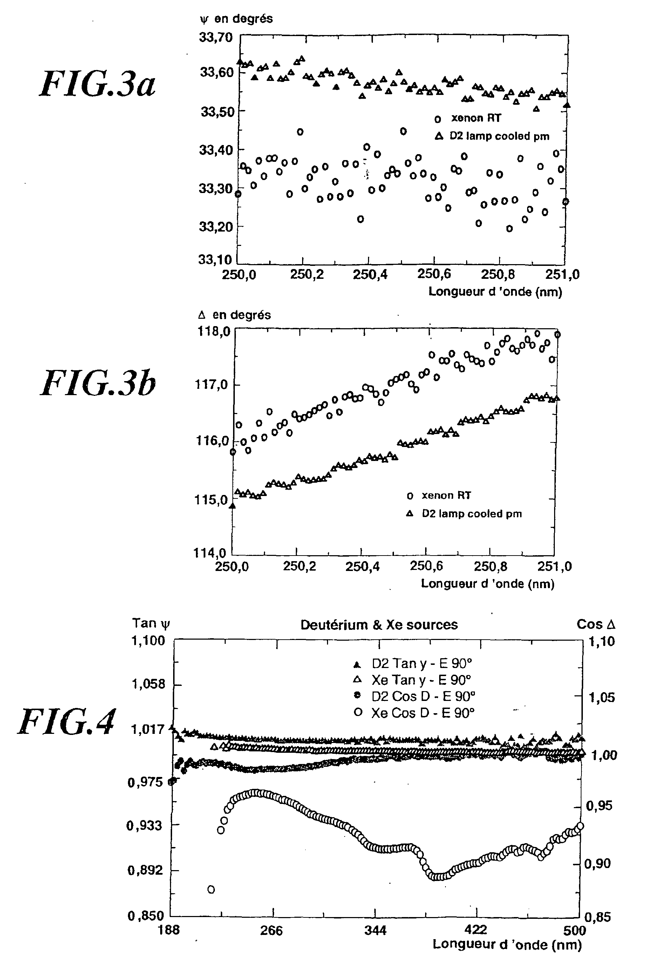

Les figures 3a et 3b illustrent des mesures de ψ et Δ obtenues sur un intervalle de longueurs d'ondes de 1 nanomètre, (autour de 250nm), respectivement dans le cas d'un ellipsomètre standard à lampe xénon, photomultiplicateur à température ambiante et détection par hadamart et dans le cas d'un ellipsomètre conforme à celui qui vient d'être décrit.

On constate une bien plus grande dispersion des mesures avec l'ellipsomètre standard qu'avec l'éllipsomètre du type de celui qui vient d'être décrit.

On a également comparé des traces directes obtenues avec l'un et l'autre des deux ellipsomètres.

C'est ce qu'illustre la figure 4.

L'amélioration est aussi nettement sensible.

On rappelle qu'en trace directe, on doit avoir : tan ψ=Cos Δ=1.

Ceci est parfaitement vérifié (à l'alignement prêt de l'optique), dans le cas de l'ellipsomètre spectroscopique faible bruit précédemment décrit, alors qu'avec un éllipsomètre standard, l'écart est bien plus important pour pour Cos Δ, de sorte qu'il est alors important de normaliser α et β.

Une application consiste à l'étendre à un montage « in situ ». Le système polariseur tournant, et analyseur sont des rochons en MgF₂ montés sous vide sur des micro moteurs (technologie vide) pas à pas dont l'axe est creux (où s'insère le Rochon en MgF2) et le codeur optique qui peut ainsi être même positionnés à l'intérieur d'un bâti ou d'une chambre de refroidissement et de métrologie d'un réacteur type « cluster tool ». Les deux entrées « source » et « analyse » sont des bloccs compacts. On peut ainsi réaliser deux têtes (analyseur et polariseur étant équivalents). Une estimation d'encombrement physique réalisable correspond à un cylindre d'environ 40 millimètres (mm) de diamètre et 60 à 70 mm de longueurs. Les fenêtres sources de biréfringence et d'absorption sont ainsi éliminées car seules les fibres optiques sont connectées au bâti du réacteur. Il a été montré que ce système peut ainsi fonctionner in situ dans un domaine spectral de 160 nm et 700 nm de longueurs d'onde des photons.

## Revendications

1. Ellipsomètre spectroscopique comportant une source lumineuse (1) émettant un faisceau optique, un polariseur (2) tournant disposé sur le trajet faisceau optique émis par la source lumineuse, un support (9) d'échantillon recevant le faisceau lumineux en sortie du polariseur, un analyseur de polarisation (3) destiné à être traversé par le faisceau réfléchi par l'échantillon à analyser, un ensemble de détection qui reçoit le faisceau sortie de l'analyseur et qui comporte un monochromateur (5) et un photodétecteur (4), des moyens (6) pour le traitement du signal en sortie de ensemble de détection, qui comportent une électronique de comptage (13),
**caractérisé en ce qu'**il comporte des moyens (12) de refroidissement pour maintenir l'ensemble de détection à une température de l'ordre de -15 C ou inférieure,
**en ce que** la source (1) est constituée par une lampe Deutérium,
**en ce que** l'électronique de comptage (13) est apte à mettre en oeuvre un échantillonnage temporel sur un nombre de canaux de l'ordre de 1000 ou supérieur,
et **en ce que** les moyens de traitement (6) mettent en oeuvre une analyse de Fourier les signaux en sortie de l'électronique de comptage.

2. Ellipsomètre selon la revendication 1, **caractérisé en ce que** l'électronique de comptage (13) est apte à mettre en oeuvre échantillonnage temporel sur un nombre de canaux compris entre 1024 et 8192

## Claims

1. A spectroscopic ellipsometer comprising a light source (1) emitting a light beam, a rotary polarizer (2) placed on the path of the light beam emitted by the light source, a sample support (9) receiving the light beam output from the polarizer, a polarization analyzer (3) for passing the beam reflected by the sample to be analyzed, a detection assembly which receives the beam from the analyzer and which comprises a monochromator (5) and a photodetector (4), and signal processor means (6) for processing the signal output from said detection assembly, and including counting electronics (13),
the ellipsometer being **characterized in that** it further comprises cooling means (12) for keeping the detection assembly at a temperature of about -15°C or lower,
**in that** the source (1) is constituted by a deuterium lamp,
**in that** the counting electronics (13) is suitable for performing time sampling over a number of channels equal to about 1000 or more, and
**in that** the processor means (6) apply Fourier analysis to the signals output by the counting electronics.

2. An ellipsometer according to claim 1, **characterized in that** the counting electronics (13) is suitable for implementing time sampling over a number of channels lying in the range 1024 to 8192.

## Patentansprüche

1. Spektroskopisches Ellipsometer, umfassend eine einen optischen Strahl emittierende Lichtquelle (1), einen drehbaren Polarisator (2), der auf der Strecke des von der Lichtquelle emittierten, optischen Strahls angeordnet ist, einen Probenträger (9), der den Ausgangslichtstrahl des Polarisators empfängt, einen Polarisationsanalysator (3), der dazu bestimmt ist, von dem Strahl, der von der zu analysierenden Probe reflektiert wird, durchquert zu werden, eine Detektiereinheit, die den Ausgangsstrahl des Analysators empfängt und die einen Monochromator (5) und einen Photodetektor (4) umfasst, Mittel (6) zur Verarbeitung des Ausgangssignals der Detektiereinheit, die eine Registrierelektronik (13) umfassen,
**dadurch gekennzeichnet, dass** es Kühlmittel (12) umfasst, um die Detektiereinheit auf einer Temperatur in der Größenordnung von -15C oder weniger zu halten,
dass die Quelle (1) von einer Deuteriumlampe gebildet wird,
dass die Registrierelektronik (13) ausgelegt ist, um eine zeitliche Abtastung auf einer Anzahl von Kanälen in der Größenordnung von 1000 oder mehr umzusetzen,
und dass die Verarbeitungsmittel (6) eine Fourieranalyse der Ausgangssignale der Registrierelektronik umsetzen.

2. Ellipsometer gemäß Anspruch 1, **dadurch gekennzeichnet, dass** die Registrierelektronik (13) ausgelegt ist, um eine zeitliche Abtastung auf einer Anzahl von Kanälen zwischen 1024 und 8192 umzusetzen.
